# EUROPEAN PATENT APPLICATION

(11) **EP 1 698 976 A1**
(43) Date of publication of application: **06.09.2006**
(21) Application number: 05004742.2
(22) Date of filing: 03.03.2005
(51) Int. Cl.: G06F 9/46, H04L 12/56

(54) **Priority-sensitive reallocation of buffer space**

(71) Applicant: SIEMENS AKTIENGESELLSCHAFT, 80333 München (DE)
(72) Inventor: Assa, Eyal, 45287 Hod Hasharon (IL); Blum, Naftaly, 69107 Tel Aviv (IL)

(57) **Abstract**

The invention proposes a priority-sensitive reallocation of buffer space shared among multiple ports. When reallocating, a share of buffer space allocated to one port is reduced by emptying occupied buffer space. The emptying of occupied buffer space is performed in accordance with traffic priorities. Upon emptying the buffer space is reallocated to another port. The present invention allows for improved processing of quality of service traffic in systems with dynamic allocation of buffer space.

## Description

The invention relates to a method and a network device for reallocating buffer space shared among multiple ports.

In the networking and telecommunications area buffers are commonly used for traffic shaping or traffic engineering. As data traffic tends to be bursty buffers are often mandatory to ensure efficient data transmission.

Modern data networks allow for type-dependent processing of different types of traffic. For example, real time traffic is treated differently from traditional data traffic. Usually, the concept of priority or precedence is employed in order to differentiate between different types of traffic, e.g. by introducing different service levels or classes of service. While traditional data traffic is less sensitive to delay (or latency) and jitter, stricter requirements as to the loss of data units may hold. Thus, buffering is to be performed according to the type of traffic.

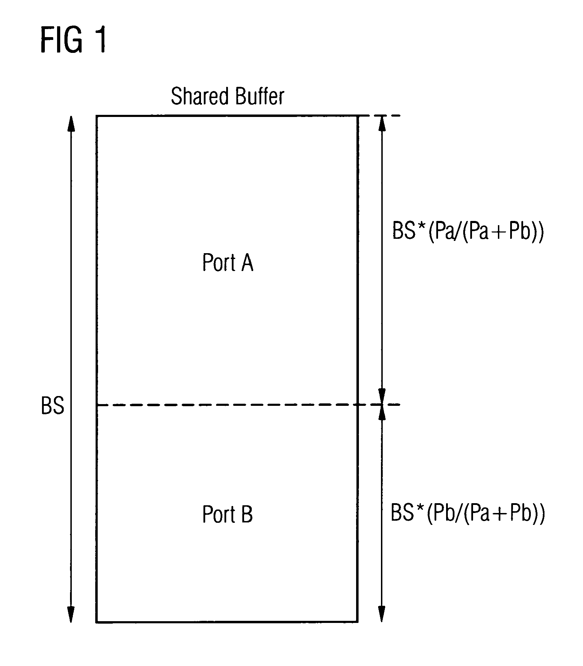

In network devices where ports have to be shared among different types of traffic buffer-managers are used to provide for traffic-type dependent treatment. When the buffer-manager needs to service a large number of flows (sources), the most common implementation is based on shared buffer architecture. In this architecture a buffer of limited size is dynamically shared among different ports or/and flows. In many systems with shared buffer architecture port bandwidth is variable so that the buffer space allocation has to be responsive to changes in port bandwidth. Fig. 1 gives an example for buffer space partitioning between two ports (in reality the number of port tends to be substantially larger). A buffer of buffer size BS is shared amongst two ports, port A and port B. The average traffic transmission rates for the ports are Pa and Pb, respectively. Consequently, port A is allocated BS*(Pa/(Pa+Pb)) buffer space and port B is allocated BS*(Pb/(Pa+Pb)) buffer space. In practice, the buffer partitioning is mostly effected by configuring a set of per-port thresholds according to the allocated buffer space. On each port the allocated buffer space is shared among flows with different priorities.

When the port bandwidth is to be changed, buffer space from the shared buffer space pool needs to be reallocated. This reallocation of buffer resources may require reducing the share of buffer space below the actual fill level, i.e. to empty part of the buffer space. Traditionally, in this case reallocation is performed in the following way. After blocking the entrance to the buffer the occupancy is reduced by emptying or flushing buffer space. Consecutively, reallocation is performed and the buffer is opened again.

In proceeding in the above way to reallocate buffer space loss of data occurs when flushing the buffer. The effect of data loss on the transmission service depends on the type of service or traffic. When loss-sensitive services (or traffic classes) need to be supported, which may also be subject to service level guarantees, dynamic reallocation is often waived. People then resort to fixed buffer allocation, i.e. the shared buffer space is allocated once and for all at system initialization. Reallocation is never performed even if the port bandwidth changes. The main disadvantage of fixed buffer reallocation is poor buffering performance due to the fact that port bandwidth and allocated buffer space are possibly out of proportion, i.e. do not correspond.

The objective of the present invention is to provide for improved dynamic buffer allocation, in particular in view of the caveats of current methods.

The present invention proposes to reallocate buffer space shared among multiple ports in priority-sensitive way. In shared buffer architecture, each port of a network device is assigned a share of buffer space. Changing the partitioning of buffer space, i.e. reallocation, may require freeing up occupied buffer space allocated to one port so that this freed buffer space may be allocated to another port. According to our invention the freeing up or emptying of buffer space is performed in accordance with traffic priorities.

Traffic priorities are usually implemented via traffic classes, where the term traffic class is to be interpreted as the assignment of priorities to traffic. Other terms found in relevant documents such as priority classes or priority levels are understood to be equivalent or more specific. When using traffic classes occupied traffic space may be emptied in the order of priority classes starting with the lowest priority class, whereby the lowest priority is assigned to the traffic class that is least sensitive to traffic loss.

The invention allows for priority-sensitive reallocation. Priority classes can be treated successively from lower to higher priorities. Thus, high priority traffic is only discarded if there is insufficient lower priority traffic to release or free up the buffer space to be reallocated. Traffic loss can be minimized for traffic classes where the quality is most affected by loss of data and can be completely avoided if sufficient buffer space can be freed by discarding lower priority traffic. Hence, the invention improves the quality of service that can be provided to high priority traffic. The invention can be applied in all systems where data units such as packets, cells, or frames are buffered, e.g. IP (Internet Protocol) packets, ATM (asynchronous transfer mode) cells, or Ethernet frames.

Removing traffic from one traffic class can be performed in the following way. First the incoming traffic of this priority class is blocked. Then traffic of this priority class is removed, e.g. by help of a linked list that provides information on the addresses where the traffic is stored. The emptying of traffic of this priority class finishes either when sufficient free buffer spaces has been made available or all traffic of this priority class has been removed from the share of buffer space originally allocated to the one port. During the process of emptying buffer space the amount of available free buffer space may be monitored and compared with the amount of free buffer space needed for reallocation. Once this amount of free buffer space is available the emptying of buffer space is stopped and the free buffer space is reallocated.

The invention also includes a network device adapted for carrying through the proposed priority-sensitive buffer space allocation, e.g. a bridge, router, gateway, or switch. For implementing the inventive method on network devices shared buffer architecture may be enhanced with software means for identifying the traffic belonging to the same traffic class and for selectively discarding buffer content, e.g. linked list, search routines etc.

Below, an embodiment of the invention is provided that illustrates the inventive concept with reference to figures. The figures show
- Fig. 1:: a schematic illustration of the shared buffer concept
- Fig. 2:: dynamic buffer space reallocation
- Fig. 3:: the effect buffer space reallocation with traffic-type sensitive treatment of the buffer content

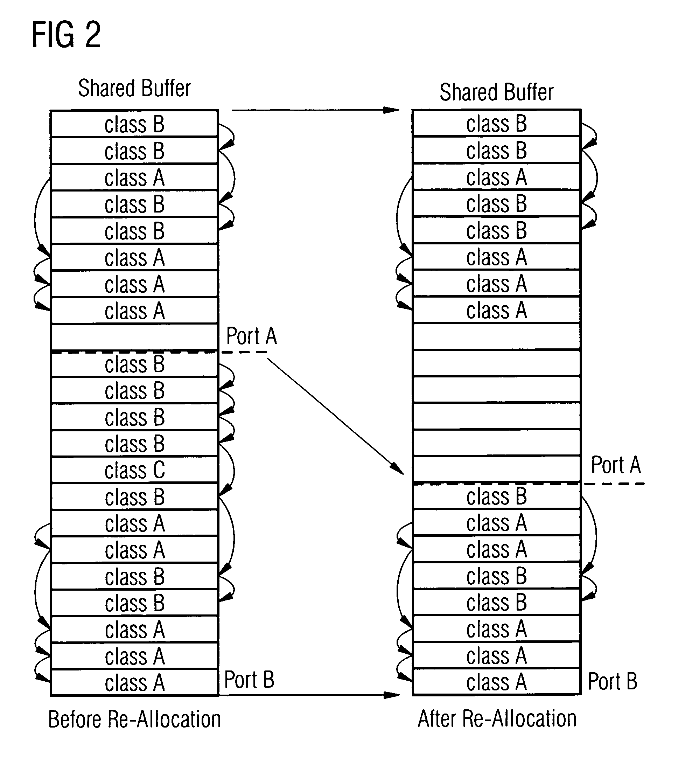

In Fig. 1, the shared buffer concept is shown. Technically, shared buffers that provide storage for multiple classes of service frequently employ linked lists. Fig. 2 shows a buffer shared between two output ports, port A and port B. The buffer is segmented with the individual segments being filled with data of one of the service classes. Segments filled with data of the same service class are linked (in Fig. 2 indicated by arrows), usually by means of an index list of the segments (linked list: not shown in Fig. 2). A linked list allows the system to keep track of the order of storage as well as the service class and to differentiate between priority classes. Within the embodiment, traffic of three different service classes is serviced; class A traffic, class B traffic and class C traffic. Below, we assume that class A traffic has a higher priority than class B traffic and class B traffic has a higher priority than class C traffic. For example, these classes may correspond to three different flows of traffic. Below we assume so, too.

By way of example, Fig. 2 illustrates a reallocation of the buffer space shared between ports A and B. Originally, Port B has a maximum size of 13 buffers and port A has a maximum size of 9 buffers. Port B contains data from the three flows A, B, and C. Flow A occupies 5 buffer segments, flow B occupies 7 buffer segments and flow C occupies 1 buffer segment. The reallocation consists of increasing the share of port A from 9 to 14 buffer segments and, consequently, to decrease the share of port B from 13 to 8 buffer segments.

The reallocation is performed according to following steps:
1. If the number of occupied buffer segments of the port's share is less than the requested new size of the buffer, the buffer can be reallocated immediately.
   Here, traffic from port B needs to be flushed.
2. The flow C, i.e. the lowest priority traffic, is blocked, resulting in that no new flow C traffic can enter the buffer. Hence, the number of buffer segments with flow C traffic cannot go up.
3. All the buffer segments with flow C traffic to be dispatched at port B are emptied. The data are discarded.
4. Once the buffer segments with flow C traffic are removed buffer segments with flow B traffic are emptied until the requested buffer size is reached.

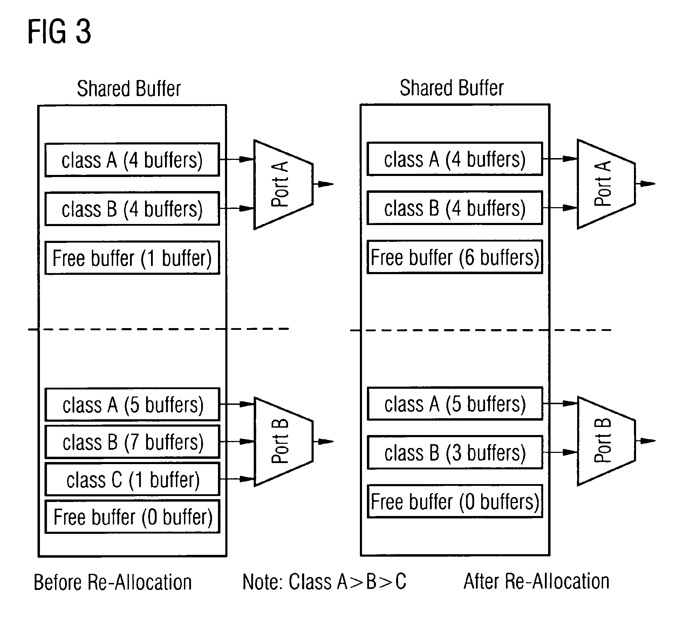

Fig. 3 shows the occupation or occupancy of the buffer before and after the reallocation. Initially, the buffer space allocated to port A contains 4 buffer segments filled with class A traffic, 4 buffer segments filled with class B traffic and one empty buffer segment. As the share of port A is increased no data need to be discarded. After reallocation 5 additional empty buffer segments are available for port A traffic.

The share allocated to port B is reduced. Before reallocation class A traffic occupies 5 buffer segments, class B traffic 7 segments and class C traffic one segment. There are no empty segments. The segment with class C traffic is emptied first. As the de-allocation of this segment is not sufficient to reduce the share of port B to the requested amount segments with class B traffic are emptied until a sufficient number of segments are free for reallocation. After reallocation the share holds 5 buffer segments with class A traffic and 3 buffer segments with class B traffic. No segments with class C traffic and no free segments remain.

## Claims

1. A method for reallocating buffer space shared among multiple ports, wherein
- a share of buffer space allocated to one port is reduced,
- occupied buffer space is emptied to free buffer space for reallocation,
- the emptying of occupied buffer space is performed in accordance with traffic priorities, and
- the emptied buffer space is reallocated to another port.

2. The method according to claim 1, wherein
- priority classes are used to classify data traffic, and
- the emptying of occupied buffer space is performed in the order of priority classes with traffic of a given priority class being emptied only after all lower priority traffic has been discarded.

3. The method according to claim 2, wherein
- incoming traffic of a priority class is blocked, and
- traffic of the priority class is removed from the buffer until
-- the amount of empty buffer space needed for reallocation is available, or all traffic of the traffic class has been removed from the share of buffer space.

4. The method according to one of the preceding claims, wherein
- it is checked whether sufficient free buffer space is available for reallocation, and
- occupied buffer space is emptied in accordance with traffic priorities if the free buffer space is not sufficient.

5. The method according to one of the preceding claims, wherein
the data traffic comprises data units such as IP packets, ATM cells, or Ethernet frames.

6. The method according to one of the preceding claims, wherein
a linked list is used to keep track of traffic belonging to the same traffic class while traffic from this traffic class is removed.

7. Network device adapted to performing a method according to one of the claims 1 to 6.
